# EUROPEAN PATENT APPLICATION

(11) **EP 2 807 944 A2**
(43) Date of publication of application: **03.12.2014**
(21) Application number: 13180461.9
(22) Date of filing: 14.08.2013
(51) Int. Cl.: A45C 11/00, A45C 13/00

(54) **Waterproofing case for electronic device**

(30) Priority: 29.05.2013 US 201313904352
(71) Applicant: Kim, Justin Chiwon, Great Neck, NY 11020 (US)
(72) Inventor: Kim, Justin Chiwon, Great Neck, NY 11020 (US)
(74) Representative: Birchenough, Lewis

(57) **Abstract**

A waterproof case 10 for an electronic device is provided. The waterproof case 10 includes: a body 20; a door 30 coupled to the body 20, and opening and closing the body 20 while pivotally rotating; an elastic member 40 disposed in the body 20 and applying elastic force to the electronic device; and a double locking unit 50 which locks the door 30 twice.

## Description

### BACKGROUND OF THE INVENTION

### 1. Field of the Invention

The present invention relates to a waterproof case for an electronic device, and more particularly to a waterproof case for an electronic device, which allows an electronic device to be easily withdrawn from the waterproof case.

### 2. Description of the Related Art

Recently, various electronic devices have been popularized for people. Portable electronic devices such as a portable terminal, an MP3 player, a Portable Multimedia Player (PMP), an electronic book reader, and the like have been generally used, which a user can carry with him/her while using various contents.

The portable electronic device refers to a device by which a user performs a wireless communication with a companion while carrying it with him/her. The portable electronic device essentially includes a display unit, an antenna unit, an input/output unit, and a data transmission and reception unit.

Further, with the rapid progress of multimedia technologies and display technologies, the recent portable electronic device has a display unit with an improved resolution. Furthermore, the recent portable electronic device has a touch screen which a user touches with a finger or a stylus pen.

The portable electronic device has been an indispensable thing for most people. Further, outdoor activities such as swimming in a pool, a valley, and sea, climbing, cycling, and the like have increased. Many people always carry the portable electronic device with him/her during the outdoor activities.

However, the portable electronic device is vulnerable to water. Accordingly, a waterproof case has been widely used in order to protect the portable electronic device from water.

A waterproof case made of a vinyl material has been mainly used. The waterproof case includes a vinyl case for receiving a portable electronic device, and a locking means such as zipper or a double-faced adhesive tape for tightly sealing an opening of the vinyl case after the portable electronic device is received in the case, which is formed at an end of the vinyl case.

The waterproof case has a structure in which the opening of the waterproof case is tightly sealed after receiving the portable electronic device. Where a user calls using the portable electronic device received in the waterproof case, the user opens the sealed opening of the waterproof case before the portable electronic device is withdrawn. Then, the user can call. The vinyl waterproof case makes the user to be inconvenienced. Furthermore, the waterproof case may be damaged during the withdrawing of the portable electronic device.

That is, the waterproof case has a disadvantage in that it may be easily damaged because the user frequently puts/takes the portable electronic device in/out the waterproof case before and after using the portable electronic device.

Therefore, a waterproof case is required to allow a user to easily put/take a portable electronic device in/from the waterproof case, to prevent damage, and to allow the user to use the portable electronic device in a state that the portable electronic device is received therein.

### SUMMARY OF THE INVENTION

Accordingly, an aspect of the present invention is to provide a waterproof case for an electronic device, which allows a user to easily put and separate the electronic device into/from the waterproof case by using elasticity of the waterproof case, and which prevent damage.

Further, still another aspect of the present invention is to provide a waterproof case for an electronic device, which includes a double locking unit having a function of double locking the waterproof case, thereby preventing the waterproof case from easily being opened and closed due to external impact and being separated from the electronic device.

In accordance with an aspect of the present invention, a waterproof case for an electronic device is provided. The waterproof case includes: a body; a door coupled to the body, and opening and closing the body while pivotally rotating; an elastic member disposed in the body and applying elastic force to the electronic device; and a double locking unit which locks the door twice.

In accordance with another aspect of the present invention, a waterproof case for an electronic device is provided. The waterproof case includes: a body; a door coupled to a lower portion of the body, and opening and closing the body while pivotally rotating; an elastic member disposed in the body, which separates the electronic device from the body by elastic force when the door is open; and a double locking unit which locks the door twice.

### BRIEF DESCRIPTION OF THE DRAWINGS

The above and other aspects, features, and advantages of the present invention will be more apparent from the following detailed description taken in conjunction with the accompanying drawings, in which:
FIG. 1 is an exploded perspective view illustrating a configuration of a waterproof case for an electronic device according to an embodiment of the present invention;
FIG. 2 is a perspective view illustrating a waterproof case for an electronic device according to the embodiment of the present invention;
FIG. 3 is a perspective view illustrating a waterproof case for an electronic device according to the embodiment of the present invention, which shows a state before a double locking unit is operated;
FIG. 4 is a sectional view illustrating a waterproof case for an electronic device according to the embodiment of the present invention, which shows a state before a double locking unit is operated;
FIG. 5 is a sectional view illustrating a waterproof case for an electronic device according to the embodiment of the present invention, which shows a state in which a double locking unit is operated;

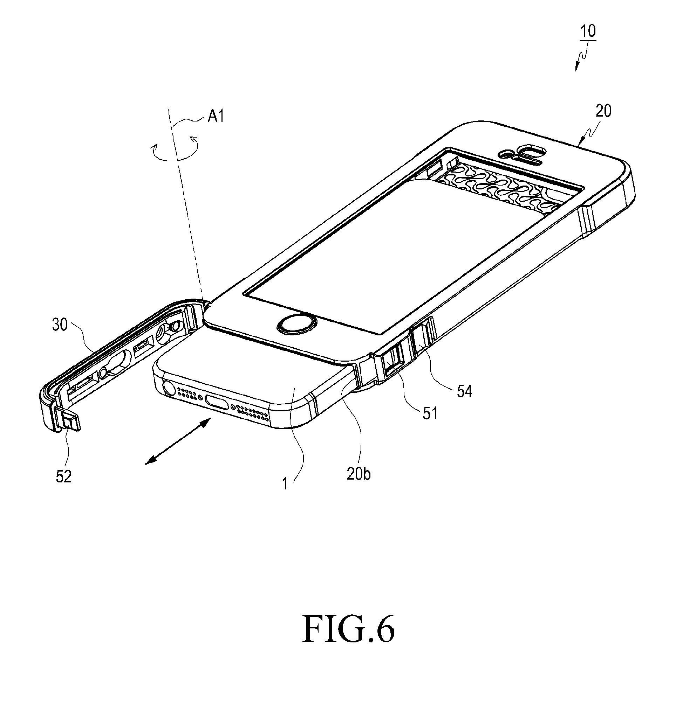

FIG. 6 is a perspective view illustrating a waterproof case for an electronic device according to the embodiment of the present invention, which shows a state in which a double locking unit is operated;

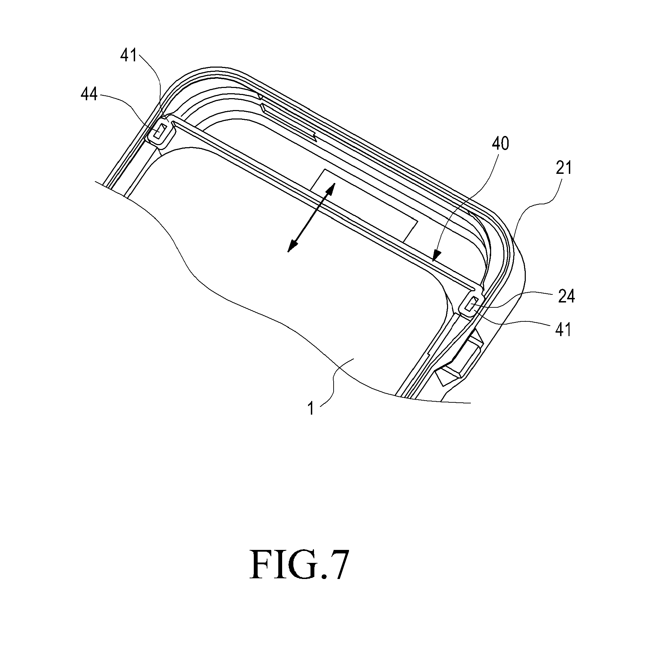

FIG. 7 is a perspective view illustrating a waterproof case for an electronic device according to the embodiment of the present invention, which shows a state in which an elastic member is operated;

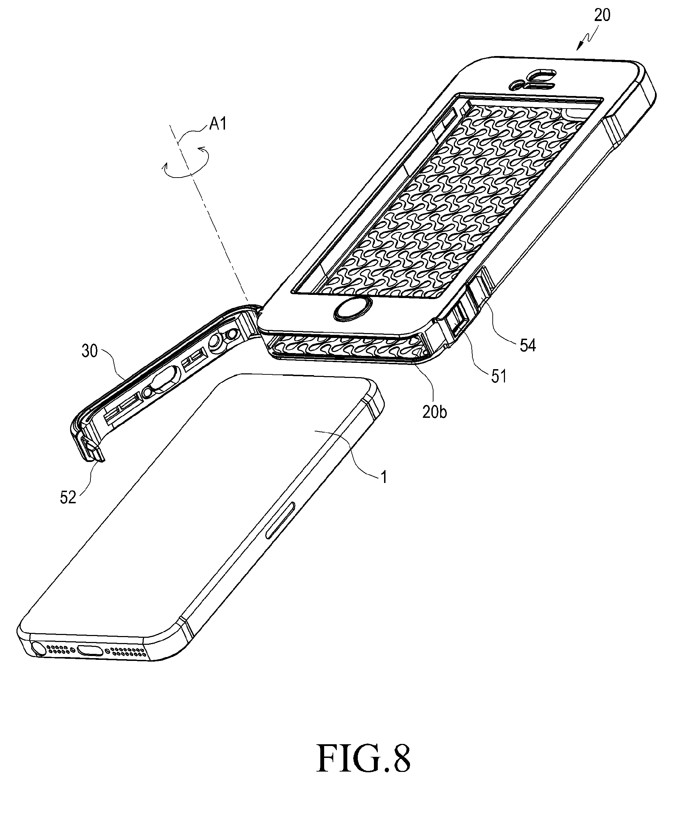

FIG. 8 is a perspective view illustrating a waterproof case for an electronic device according to the embodiment of the present invention, which shows a state in which the electronic device is separated from the waterproof case;
FIG. 9 is a perspective view illustrating a waterproof case for an electronic device according to the embodiment of the present invention, which shows another example of an elastic member; and
FIG. 10 is a perspective view illustrating a waterproof case for an electronic device according to the embodiment of the present invention, which shows still another example of an elastic member.

### DETAILED DESCRIPTION OF EMBODIMENTS OF THE PRESENT INVENTION

The detailed description with reference to the accompanying drawings is provided in order to help understanding of the embodiment of the present invention as defined in the claims and equivalents. The description includes various specific details to help the understanding, but the specific details are regarded as examples. Further, in the following description, a detailed description of well-known functions and configurations incorporated herein will be omitted when it may make the subject matter of the present invention rather unclear.

Hereinafter, a waterproof case for an electronic device according to the embodiment of the present invention will be described with reference to the accompanying drawings. The electronic device according to the embodiment of the present invention includes all information and communication devices and multimedia devices, such as a Portable Multimedia Player (PMP), an MP3 player, a navigation, a game player, a notebook, a netbook, an advertising panel, a TV, a digital broadcasting receiver, a Personal Digital Assistant, and a smart phone, as well as all kinds of mobile communication terminals which operate according to communication protocols corresponding to various communication systems, and application devices thereof.

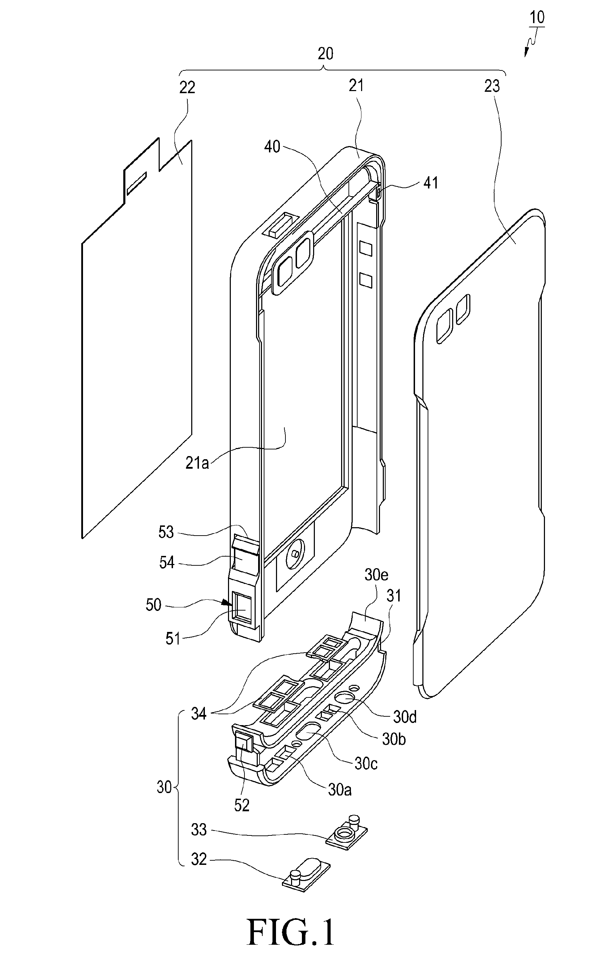

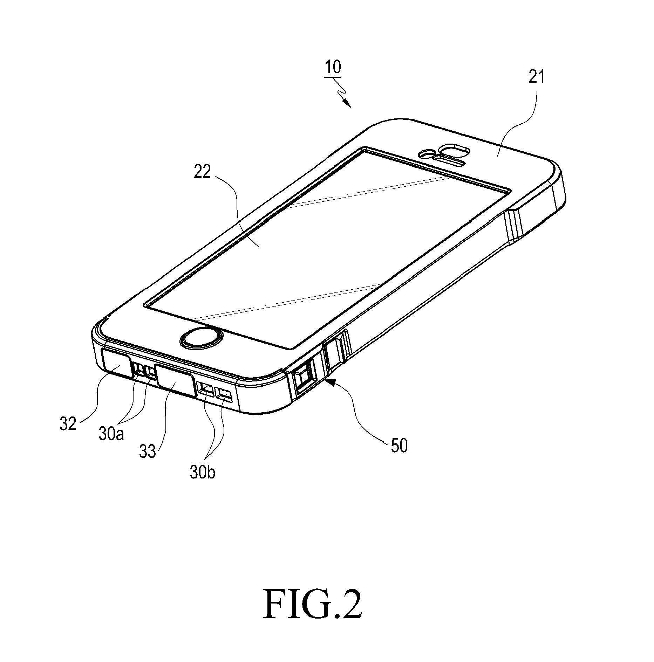

A configuration of a waterproof case 10 according to an embodiment of the present invention will be described in detail with reference to FIGS. 1 and 2.

FIG. 1 is an exploded perspective view illustrating a configuration of a waterproof case for an electronic device according to an embodiment of the present invention, and FIG. 2 is a perspective view illustrating a waterproof case for an electronic device according to the embodiment of the present invention.

Referring to FIGS. 1 and 2, the waterproof case 10 includes a case body 20, a door 30, an elastic member 40, and a double locking unit 50. The body 20 of the waterproof case 10 is combined with the door 30, the elastic member 40, and the double locking unit 50. The door 30 is connected to a lower portion of the body 20 by a hinge 20 and is able to be pivotally rotated around the hinge 20 so as to open and close the body 20. The elastic member 40 is disposed in the body 20 so as to enable the electronic device 1 to be separated from the body 20 by elastic force of the elastic member 40 when the door 30 is open. The double locking unit 50 is mounted on the body 20 of the waterproof case, and double locks the door 30 in order to prevent the door 30 from being opened easily due to an external impact. In other words, the double locking unit 50 locks the door 30 twice, thereby preventing the door 30 from being opened easily due to the external impact caused by a fall of the waterproof case.

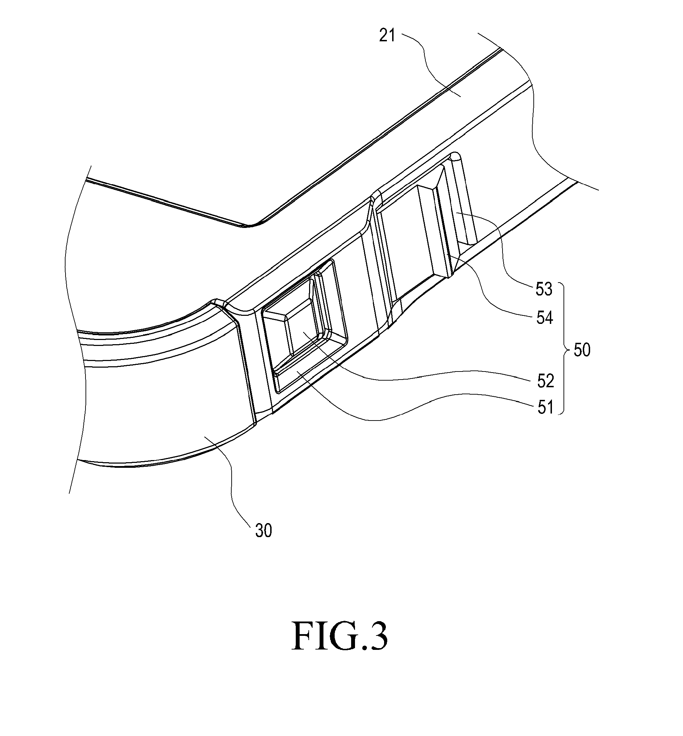

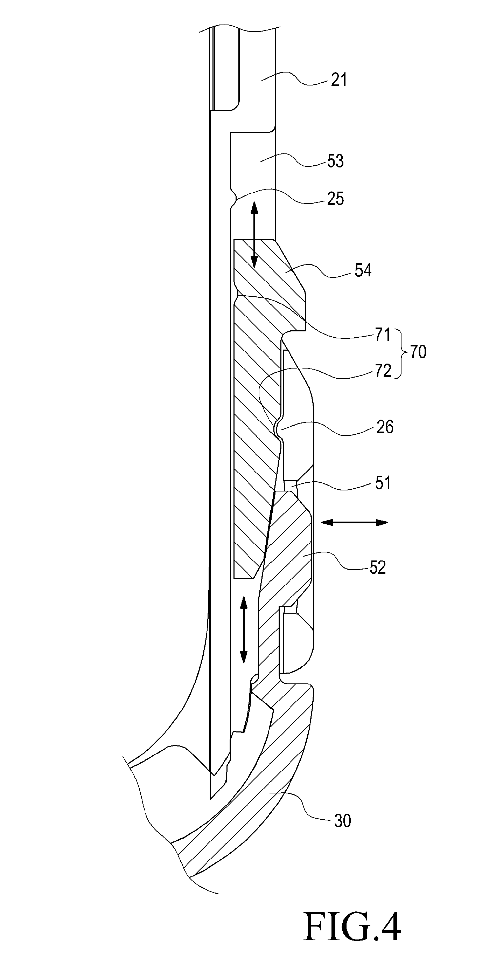

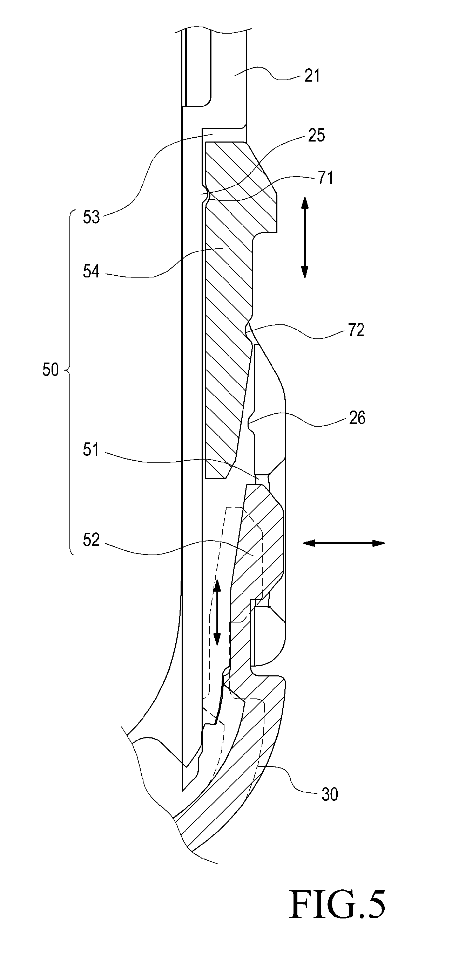

FIG. 3 is a perspective view illustrating a waterproof case for an electronic device according to the embodiment of the present invention, which shows a state before a double locking unit is operated, FIG. 4 is a sectional view illustrating a waterproof case for an electronic device according to the embodiment of the present invention, which shows a state before a double locking unit is operated, and FIG. 5 is a sectional view illustrating a waterproof case for an electronic device according to the embodiment of the present invention, which shows a state in which a double locking unit is operated.

Referring to FIGS. 3 to 5, the configuration of the double locking unit 50 will be described in detail. As shown in FIG. 3, the double locking unit 50 includes a locking hole 51 formed in the body 20 of the waterproof case 10, a first locker 52 formed on the door 30, a locking groove 53 formed on the body 20, and a second locker 54. The first locker 52 is formed on the door 30 to be firstly fastened with or released from the locking hole 51 when the door 30 pivotally rotates around the hinge 31. The second locker 54 is movably disposed in the locking groove 53, and moves in the locking groove 53 to secondly support that the first locker 52 is locked in or released from the locking hole 51. As shown in FIGS. 4 and 5, the second locker 54 has at least one stopper 70 which is engaged with at least one stopping protrusion 25 or 26 formed on the body 20 so as to restrict the movement of the second locker 54. The stopper 70 includes first and second stopping grooves 71 and 72, of which the first stopping groove 71 is engaged with the first stopping protrusion 25 formed on the body 20 of the waterproof case 10, and the second stopping groove 72 is engaged with the second stopping groove 26 of the body 20 of the waterproof case 10.

Further, the configuration of the body 20 of the waterproof case 10 will be described in detail below.

As shown in FIG. 1, the body 20 of the waterproof case 10 includes a front cover 21, a window 22, and a rear cover 23. The front cover 21 has an opening 21a formed therein, to which the window 22 made of a transparent material is attached. The window 22 is made of the transparent material and attached to a front surface of the front cover 21, through which a user can view a display unit (not shown) of the electronic device 1 inserted in the front cover 21. The rear cover 23 is combined with the front cover 21 to cover a rear portion of the front cover 21.

Here, the front cover 21 and the rear cover 23 are adhered by an ultrasonic welding.

The front cover 21 is made of a synthetic resin material and has a rubber material attached to an inside surface thereof. Accordingly, the rubber material inside of the front cover 21 can protect the electronic device 1 from an applied external impact.

As shown in FIG. 1, the door 30 includes a hinge 31 which has a side hinge arm (not shown) formed on the body 20, and a center hinge arm (not shown) formed on the door 30 and pivotally assembled with the side hinge arm. Further, the door 30 includes an earphone jack cover 32 and an interface cover 33, which respectively waterproof an earphone jack hole 30c and an interface hole 30d. The door 30 has a microphone hole 30a and a speaker hole 30b formed therein, and a waterproof member 34 to waterproof the microphone hole 30a and the speaker hole 30b. The waterproof member 34 is made of a waterproof material such as PTEE or TEMISH. That is, the waterproof member 34 prevents water from permeating to a microphone (not shown) and a speaker (not shown) of the electronic device 1, even though the body 20 of the waterproof case 10 is put in water. Of course, the waterproof member 4 may be made of other synthetic resin materials as well as the synthetic resin material such as PTEE or TEMISH.

Meanwhile, the elastic member 40 includes an elastic band made of a rubber material, at both ends of which mounting portions 41 are combined with protrusions 24 formed in the body 20 of the waterproof case 10 so as to fix the elastic band to the body 20. In the embodiment of the present invention, the elastic band made of the rubber material is described as an example of the elastic member 40, but the elastic member is not limited to the elastic band. That is, any configuration capable of pushing the electronic device 1 out of the body 20 by its elasticity can be applied to the present invention, as another example of the elastic member.

Hereinafter, another embodiment of the elastic member 40 will be described in detail.

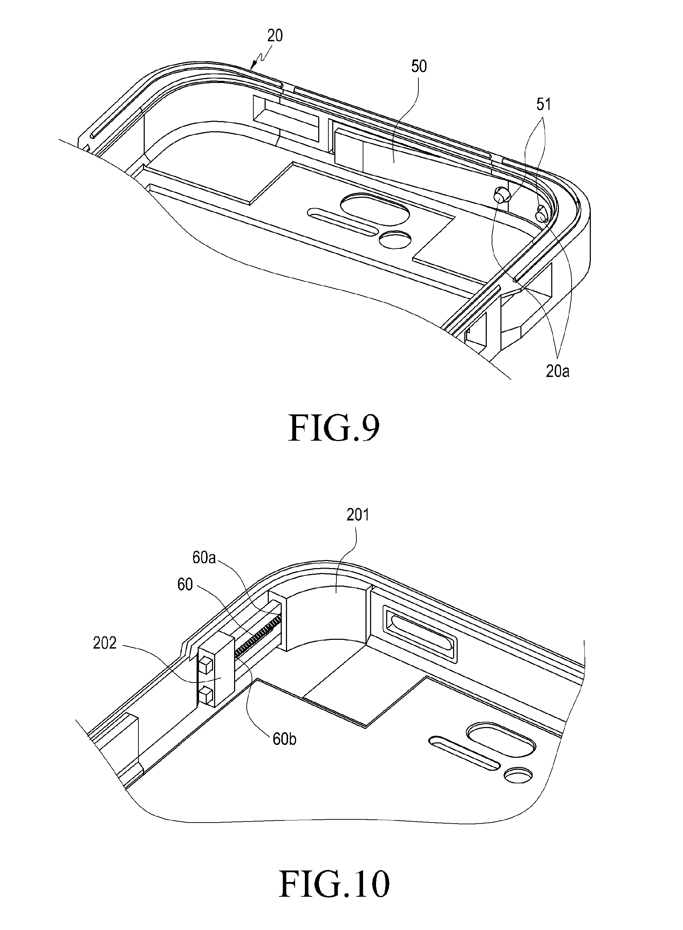

FIG. 9 is a perspective view illustrating a waterproof case for an electronic device according to the embodiment of the present invention, which shows another example of an elastic member.

As shown in FIG. 9, the elastic member 40 includes a plate spring, at one end of which at least one locking hole 51 is formed and combined with at least one protrusion 20a formed in the body 20 so as to lock the plate spring to the body 20 of the waterproof case.

That is, the plate spring fixed to the body 20 of the waterproof case 10 is pushed and compressed by one end of the electronic device 1 contacting with the plate spring when the electronic device 1 is inserted in the body 20 of the waterproof case. In this state, when the double locking unit 50 is released, the door 30 is opened and the compressed plate spring elastically expands to apply elasticity to the electronic device 1 inserted in the body 20 of the waterproof case 10, resulting in automatically pushing out the electronic device 1.

Further, an elastic member according to still another embodiment of the present invention will be described in detail.

FIG. 10 is a perspective view illustrating a waterproof case for an electronic device according to the embodiment of the present invention, which shows still another example of an elastic member.

As shown in FIG. 10, the elastic member 40 includes a coil spring, one end 60a of which is fixed to a fixed portion 201 formed in the body 20 of the waterproof case 10 and the other end 60b of which is coupled to a movement portion 202 mounted on the body 20 of the waterproof case 10. The coil spring is compressed or expanded as the movement portion 202 moves, at the same time when the coil spring comes in contact with the electronic device 1.

That is, the coil springs are disposed at both sides of the body 20 of the waterproof case. When the electronic device 1 is inserted in the body 20 of the waterproof case, the electronic device 1 comes in contact with the movement portion 202 coupled to the other end 60b of the coil spring. Then, when the electronic device 1 is pushed and inserted in the body 20, the electronic device 1 and the movement portion 202 move together so as to compress the coil spring. In this state, when the double locking unit 50 is released, the door 30 is opened and the compressed coil spring expands and provides an elastic force. The movement portion 202 is moved by the elastic force, while moving the electronic device 1. At this time, the electronic device 1 is automatically separated from the body 20 by the elastic force of the coil spring.

Hereinafter, a process of assembling the waterproof case according to the embodiment of the present invention will be described in detail as follows.

As shown in FIGS. 1 and 2, the body 20 of the waterproof case includes the front cover 21 and the rear cover 23. Further, the window 22 made of the transparent material is attached to the front cover 21 to cover the opening 21 a. The elastic band is assembled to the front cover 21 by combining the fixing portions 41 formed at both ends of the elastic band to the protrusions. Then, the rear cover 23 is attached to the front cover 21 by the ultrasonic welding. In turn, the door 30 is connected to the body 20 in such a manner that the center hinge arm of the door 30 is coupled to the side hinge arm of the covers to pivotally rotate around a hinge axis A1. The door 30 includes the earphone jack cover 32 and the interface cover 33, and has the microphone hole 30a and the speaker hole 30b formed therein, in which the waterproof members 34 are respectively inserted in order to waterproof the microphone hole 30a and the speaker hole 30B. The door 30 further includes a silicon member 30e for preventing water from permeating to the waterproof case.

The body 20 of the waterproof case is open at a lower portion thereof. Accordingly, the electronic device 1 can be inserted and removed through n inserting hole formed at the lower portion of the body 20 in/from the waterproof case 10. When the electronic device 1 is inserted at a predetermined depth in the body 20, it comes in contact with the elastic member 40. Then, when the electronic device 1 is fully inserted in the body 20 of the waterproof case 10, the elastic member 40 is bent. As a result, enough elastic force is generated to push the electronic device 1 out of the body of the waterproof case.

The door 30 pivotally rotates around the hinge axis A1 so that the first locker 52 formed at one end of the door 30 is inserted into the locking hole 51 formed in the body 20 so as to firstly lock the waterproof case 10. When the second locker 54 is moved in the locking groove 53, the second locker 54 comes in contact with a rear surface of the first locker 52, and secondly supports the locking of the first locker 52.

While the second locker 54 is moved, the first stopping groove 71 formed in the second locker 54 is separated from the first stopping protrusion 25 of the body 20, and the second stopping groove 72 is engaged with the second stopping protrusion 26.

That is, when the second locker 54 is moved, the first and second stopping grooves 71 and 72 move together. The second stopping groove 72 is engaged with the second stopping protrusion 26 and restricts the movement of the second locker 54.

In other words, at the same time as when the second locker 54 comes in contact with the rear surface of the first locker 52, it supports the locking of the first locker 52 while preventing the first locker 52 from being separated from the locking hole 51. Accordingly, the first locker 52 is locked twice, thereby improving the locking performance of the door 30.

As described above, when the door 30 is locked to the body 20 of the waterproof case 10 after the electronic device 1 is inserted in the body, it is possible to prevent water from permeating to the body 20.

Here, if a user wants to separate the electronic device 1 from the body 20 of the waterproof case 10, firstly, the second locker 54 is pushed and moved in the locking groove 53. At this time, the first and second stopping grooves 71 and 72 of the second locker 54 are moved along with the second locker 54. The second stopping groove 72 is separated from the second stopping protrusion 26, and the first stopping groove 71 is engaged with the first stopping protrusion 25 so as to restrict the movement of the second locker 54.

The second locker 54 is separated from the first locker 52 and withdraws the support for the locking of the first locker 52. Then, when the first locker 52 is pushed, the first locker 52 is bent and is released from the locking hole 51.

When the door 30 is released, the electronic device 1 is simultaneously moved by the elastic force of the elastic member 40 and pushes the door 30 while being separated from the body 20. The door 30 opens the insertion hole 20a of the body 20.

That is, the electronic device 1 rotates the door 20 around the hinge axis A1 during the separation, and opens the body 20 of the waterproof case.

The door 30 is firstly locked by the first locker 52 so as to prevent the electronic device 1 from being separated from the body 20 of the waterproof case. Furthermore, the first locker 52 is secondly locked by the second locker 54. Accordingly, the first locker 52 can prevent the door 30 from opening due to an external impact or an unconscious movement of a user. Of course, since the door 30 is not opened by means of the first and second lockers 52 and 54 under any impact, the electronic device 1 can be prevented from being separated.

As described above, in an existing vinyl type waterproof case (not shown), when a user wants to use an electronic device (not shown), the user directly opens a sealed waterproof case to separate the electronic device from the waterproof case. Accordingly, there is inconvenience in that it is annoying to put and separate the electronic device in/from the waterproof case. Also, there is a disadvantage in that the existing waterproof case is easily damaged.

However, according to the embodiment of the present invention, the elastic member 40 is provided to the door 30 of the body 20 of the waterproof case. The elastic member 40 provides elastic force to push the electronic device out of the waterproof case when the door 30 is open. Accordingly, it is possible to separate the electronic device from the waterproof case easily. Furthermore, the double locking unit 50 is established to the body of the waterproof case to lock the door twice. Therefore, it is possible to prevent the waterproof case from opening due to external impact or a fall.

While the present invention has been shown and described with reference to certain embodiments thereof, it will be understood by those skilled in the art that various changes in form and details may be made therein without departing from the spirit and scope of the present invention as defined by the appended claims.

## Claims

1. A waterproof case for an electronic device, comprising:
a body;
a door coupled to the body, and opening and closing the body while pivotally rotating;
an elastic member disposed in the body and applying elastic force to the electronic device; and
a double locking unit which locks the door twice.

2. The waterproof case for an electronic device as claimed in claim 1, wherein the elastic member is any one of an elastic band made of a rubber material, a plate spring, and a coil spring.

3. A waterproof case for an electronic device, comprising:
a body;
a door coupled to a lower portion of the body, and opening and closing the body while pivotally rotating;
an elastic member disposed in the body, which separates the electronic device from the body by elastic force when the door is open; and
a double locking unit which locks the door twice.

4. The waterproof case for an electronic device as claimed in claim 3, wherein the body comprises:
a front cover;
a window disposed on a front surface of the front cover; and
a rear cover disposed on a rear surface of the front cover.

5. The waterproof case for an electronic device as claimed in claim 4, wherein the front cover and the rear cover are adhered by an ultrasonic welding.

6. The waterproof case for an electronic device as claimed in claim 3, wherein the window is made of a transparent material.

7. The waterproof case for an electronic device as claimed in claim 3, wherein the door further includes a hinge pivotally connected to the body, an earphone jack cover, an interface cover, and waterproof members which waterproof a microphone hole and a speaker hole formed therein.

8. The waterproof case for an electronic device as claimed in claim 3, wherein the elastic member includes an elastic band, at both ends of which fixing holes are formed and coupled to protrusions formed on the body, so as to fix the elastic member to the body.

9. The waterproof case for an electronic device as claimed in claim 8, wherein the elastic band is made of a rubber material.

10. The waterproof case for an electronic device as claimed in claim 3, wherein the elastic member includes a plate spring, at one end of which at least one fixing hole is formed and coupled to at least one protrusion formed on the body, so as to fix the plate spring to the body.

11. The waterproof case for an electronic device as claimed in claim 3, wherein the elastic member includes a coil spring, one end of which is fixed to a fixing part formed on the body and other end of which is coupled to a moving part disposed in the body, which is expanded and compressed according to a movement of the moving part while being in contact with the electronic device.

12. The waterproof case for an electronic device as claimed in claim 3, wherein the double locking unit comprises:
a locking hole formed in the body;
a first locker formed on the door, which is released from the locking hole when the door rotates;
a locking groove formed in the body; and
a second locker movably disposed in the locking groove, which supports a locking of the first locker and help a releasing of the first locker while moving along the locking groove.

13. The waterproof case for an electronic device as claimed in claim 12, wherein the second locker includes at least one stopping protrusion formed the body, and at least one stopping groove which restricts a movement of the second locker while the stopping protrusion is engaged with the stopping groove.

14. The waterproof case for an electronic device as claimed in claim 13, wherein the stooping groove includes a first stopping groove engaged with a first stopping protrusion which is formed on the body, and a second stopping groove engaged with a second stopping protrusion which is formed on the body.
